# EUROPÄISCHE PATENTSCHRIFT

(11) **EP 3 147 891 B1**
(45) Veröffentlichungstag und Bekanntmachung des Hinweises auf die Patenterteilung: **31.07.2019**
(21) Anmeldenummer: 16167985.7
(22) Anmeldetag: 02.05.2016
(51) Int. Cl.: G09F 9/33, G09F 21/04

(54) **ZUSATZLICHTSYSTEM FÜR WARNBALKEN MIT LED-LOCHMATRIXDISPLAY**
ADDITIONAL LIGHT SYSTEM FOR WARNING BEAMS WITH LED HOLE MATRIX DISPLAY
SYSTEME D'ECLAIRAGE SUPPLEMENTAIRE POUR RAMPES LUMINEUSES COMPRENANT UN AFFICHEUR MATRICIEL A DEL

(30) Priorität: 05.05.2015 DE 102015107008
(43) Veröffentlichungstag der Anmeldung: 29.03.2017
(73) Patentinhaber: Standby Pintsch GmbH, 46537 Dinslaken (DE)
(72) Erfinder: RÖBEN, Kai, 44866 Bochum (DE); SCHULZE, Henrik, 46535 Dinslaken (DE); ZAJONZ, Andreas, 44807 Bochum (DE); ALBRECHT, Frank, 46562 Voerde (DE)
(74) Vertreter: CBDL Patentanwälte

(56) Entgegenhaltungen:
- DE-A1- 4 206 959
- DE-U1-202007 004 859
- DE-U1-202007 004 860
- US-A1- 2006 192 684
- US-A1- 2009 256 697

## Beschreibung

### TECHNISCHES GEBIET DER ERFINDUNG

Die Erfindung betrifft ein Zusatzlichtsystem für Warnbalken mit LED-Lochmatrixdisplay, einen Warnbalken und ein mit einem entsprechenden Warnbalken ausgestattetes Einsatzfahrzeug. Ein solches Zusatzlichtsystem, eine dafür geeignete Platine, sowie ein solcher Warnbalken und ein mit einem solchen Warnbalken ausgestattetes Einsatzfahrzeug sind aus der DE 20 2007 004 860 U1 bekannt.

### HINTERGRUND DER ERFINDUNG

Es ist seit langem bekannt, Einsatzfahrzeuge zum Beispiel von Polizei und Feuerwehr dachseitig mit Sondersignalanlagen in Form sogenannter "Warnbalken" auszustatten.

Moderne Warnbalken sind üblicherweise modular aufgebaut und besitzen unter anderem ein LED-Lochmatrixdisplay zur Darstellung von aus einer Anzahl von Lichtpunkten gebildeten Zeichen, insbesondere alphanumerischen Zeichen. Damit können dann Texte wie "STOPP POLIZEI", "ACHTUNG UNFALL" o.dgl. dargestellt werden. Die Lesbarkeit eines alphanumerischen Zeichens hängt stark von der Größe der einzelnen Lichtpunkte ab, wobei Leuchtdioden in sogenannter "verdrahteter Technik" (mit auf der Rückseite einer Leiterplatte verlöteten Anschlüssen) aufgrund ihrer Bauform einen deutlich größeren Lichtpunkt erzeugen als Leuchtdioden in sogenannter SMD-(Surface-Mounted-Device)- oder COB-(Chip-on-Board)-Technik. Allerdings sind LEDs in SMD- oder COB-Technik hinsichtlich der Herstellung einer entsprechenden Leiterplatte wesentlich kostengünstiger als herkömmlich bedrahtete LEDs. Die DE 20 2007 004 860 U1 schlägt deshalb ein sogenanntes Lochmatrixdisplay vor, bei dem es eine speziell ausgestaltete Lochblende mit einer Vielzahl von in Lichtaustrittsöffnungen mündenden Lichtleithülsen vorteilhaft erlaubt, in SMD- oder COB-Technik auf eine Platine aufgebrachte LEDs für ein entsprechendes Display in einem Warnbalken zu verwenden.

Das in dem genannten deutschen Gebrauchsmuster DE 20 2007 004 860 U1 beschriebene Lochmatrixdisplay hat sich in der Praxis überaus bewährt. Allerdings besteht kundenseitig häufig der Wunsch, in den Warnbalken weitere optische Warneinrichtungen zu integrieren, insbesondere sogenannte Heckwarnleuchten, die bei Bedarf vom Warnbalken aus Lichtsignale aussenden können, deren Helligkeit die Helligkeit der mittels eines entsprechenden Lochmatrixdisplays erzeugbaren Schriftzeichen deutlich übersteigt. Typische Kundenanforderungen an solche Signale liegen zum Beispiel im Bereich von 200 cd effektiv.

Bei Einsatzfahrzeugen handelt es sich häufig um Leasingfahrzeuge, die am Ende der Leasinglaufzeit in einem "zivilen", d.h. so zurückgebauten Zustand zurückgegeben werden sollen, dass sämtliche Sondereinrichtungen wie bestimmte Lichtsignalanlagen entfernt sind. Es bietet sich daher an, diverse optische und/oder akustische Warnanlagen in einem Warnbalken anzuordnen, der am Ende der Leasinglaufzeit verhältnismäßig einfach von dem jeweiligen Fahrzeug entfernt werden kann.

Um die Fahreigenschaften des jeweiligen Fahrzeugs, insbesondere dessen cw-Wert nicht zu stark zu beeinflussen, sollen Warnbalken möglichst "windschnittig" aufgebaut sein und eine möglichst geringe Bauhöhe besitzen, wobei das im bestimmungsgemäßen Montagezustand eines Warnbalkens auf einem Fahrzeugdach im Wesentlichen vertikal aufgerichtete Lochmatrixdisplay eine Mindestbauhöhe des Warnbalkens bestimmt, da die dargestellten Schriftzeichen eine bestimmte Mindestgröße, üblicherweise zwischen etwa 7 und 12 cm besitzen sollen, um gute Lesbarkeit zu gewährleisten. Der für Zusatzwarnleuchten zur Verfügung stehende Raum in einem Warnbalken ist daher begrenzt, da außer dem Lochmatrixdisplay weitere Warneinrichtungen wie zum Beispiel sogenannte Rundumkennleuchten in dem Warnbalken untergebracht werden müssen.

Aus der DE 20 2007 004 859 U1 ist eine Anzeigeeinheit der eingangs genannten Art mit zur Darstellung alphanumerischer Zeichen angeordneten LEDs und zur Erzeugung zusätzlicher Lichtsignale, insbesondere heller Lichtblitze angeordneten Hochleistungs-LEDs bekannt. Bei dieser Anzeigeeinheit werden auf einer gemeinsamen Leiterplatte sowohl die LEDs zur Darstellung der Schriftzeichen als auch die LEDs zur Erzeugung zusätzlicher optischer Warnsignale verlötet. Eine einfache Nachrüstung oder die Verwendung von in SMD- bzw. COB-Technik hergestellten LEDs ist bei dieser bekannten Lösung nicht möglich.

Zur Lösung des Problems der Anordnung von Zusatzwarnleuchten bei den eingangs genannten vorteilhaften Lochmatrixdisplays mit in Lichtaustrittsöffnungen mündenden Lichtleithülsen ist vorgeschlagen worden, entsprechende Zusatzleuchten oberhalb oder unterhalb eines Lochmatrixdisplays anzubringen. Dies erhöht jedoch die Bauhöhe des Warnbalkens. Zudem sind solche Lösungen bei existierenden Warnbalken aufgrund des nicht vorhandenen Platzes oberhalb oder unterhalb eines Lochmatrixdisplays nicht nachrüstbar.

### OFFENBARUNG DER ERFINDUNG

Davon ausgehend liegt der Erfindung die Aufgabe zugrunde, ein Zusatzlichtsystem für Warnbalken, insbesondere ein optisches Heckwarnsystem anzugeben, das in bekannte Warnbalken mit Lochmatrixdisplay integriert werden kann, ohne die Bauhöhe eines solchen Warnbalkens nachteilig zu beeinflussen. Vorteilhaft soll das Lichtsystem so ausgebildet sein, das es auch bei existierenden Warnbalken mit Lochmatrixdisplay leicht nachgerüstet werden kann.

Die Erfindung wird von einem Zusatzlichtsystem mit den Merkmalen des Anspruchs 1 gelöst. Die nebengeordneten Ansprüche 9 und 10 betreffen einen erfindungsgemäß ausgerüsteten Warnbalken bzw. ein mit einem solchen Warnbalken versehenes Einsatzfahrzeug. Vorteilhafte Ausgestaltungen und Weiterbildungen sind Gegenstand der abhängigen Ansprüche.

Die Erfindung hat den Vorteil, eine kostengünstige Lösung für kundenseitige Wünsche nach zusätzlichen Lichteinrichtungen, insbesondere optischen Warneinrichtungen zur Verfügung zu stellen, die es ermöglicht, Warnbalken weiterhin nach dem bewährten Baukastenprinzip aufzubauen und dabei vorteilhaft Lochmatrixdisplays mit in SMD- bzw. COB-Technik auf eine Leiterkarte aufgebrachten LEDs zu verwenden, gleichzeitig aber Kundenwünsche und Zulassungsnormen hinsichtlich bestimmter Mindestlichtstärken für entsprechende optische Warnsystem erfüllen zu können. Zudem beeinflusst das Zusatzlichtsystem weder die Bauhöhe noch den cw-Wert eines entsprechenden Warnbalkens.

Weitere Einzelheiten und Vorteile der Erfindung ergeben sich aus der nachfolgenden rein beispielhaften und nicht-beschränkenden Beschreibung eines Ausführungsbeispiels in Verbindung mit der Zeichnung.

### KURZE BESCHREIBUNG DER ZEICHNUNG

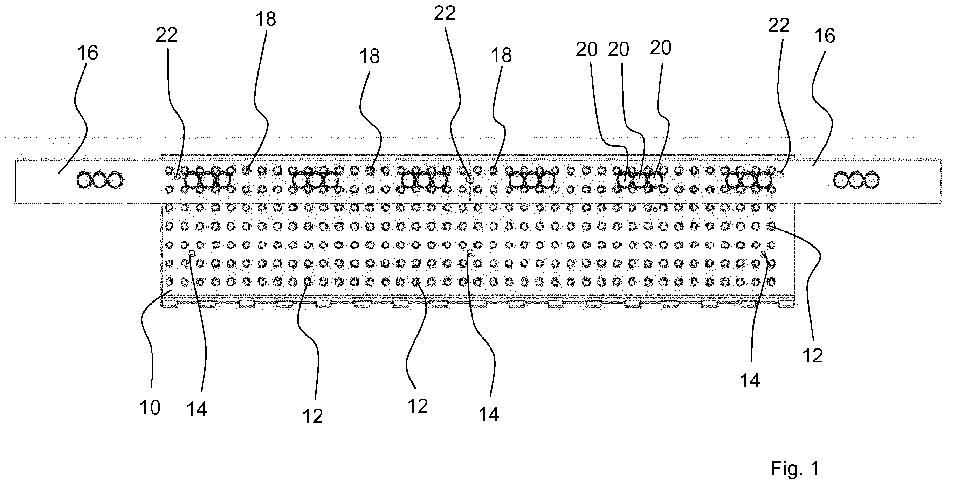

- Fig. 1: zeigt in schematisierter Draufsicht ein Lochmatrixdisplay mit einem daran angebrachten erfindungsgemäßen Zusatzlichtsystem.

### BESCHREIBUNG BEVORZUGTER AUSFÜHRUNGSFORMEN

In der Fig. 1 ist eine Draufsicht auf die Lichtaustrittsseite eines in seiner Gesamtheit mit 10 bezeichneten Lochmatrixdisplays, insbesondere eines Displays wie in der eingangs genannten DE 20 2007 004 860 U1 beschrieben, gezeigt.

Das Lochmatrixdisplay 10 verfügt über eine Vielzahl von Lichtaustrittsöffnungen 12, von denen aus Gründen der Übersichtlichkeit nur einige mit Bezugszeichen versehen wurden. Auf der den Lichtaustrittsöffnungen 12 gegenüberliegenden Seite befinden sich in SMD- oder COB-Technik auf eine Leiterkarte aufgebrachte LEDs, die durch entsprechende Ansteuerung das Erzeugen von aus einzelnen Lichtpunkten zusammengesetzten alphanumerischen Zeichen erlauben.

Das Lochmatrixdisplay weist bei diesem Ausführungsbeispiel 280 Lichtaustrittsöffnungen auf, die nebeneinander in sieben Reihen und übereinander in vierzig Spalten regelmäßig verteilt angeordnet sind. Bei den Öffnungen 14 in dem Lochmatrixdisplay 10 handelt es sich nicht um Lichtaustrittsöffnungen, sondern um Öffnungen für Befestigungselemente wie insbesondere Schrauben.

Die beispielhaft gezeigte Anordnung stellt einen guten Kompromiss zwischen Baugröße des Displays und Lesbarkeit der damit dargestellten Schriftzeichen dar und hat sich in der Praxis überaus bewährt.

Das Lochmatrixdisplay 10 ist mit einem erfindungsgemäßen Zusatzlichtsystem ausgestattet, wobei das Zusatzlichtsystem hier in Form eines Zusatzwarnsystems zur Erzeugung zusätzlicher optischer Warnsignale vorliegt, das bei diesem Ausführungsbeispiel zwei längliche Platinen 16 umfasst, die sich jeweils quer über einen Abschnitt des Lochmatrixdisplays erstrecken und über dieses hinausragen. Jede Platine 16 verfügt bei diesem Ausführungsbeispiel über vierzig Lichtaustrittsöffnungen 18, von denen aus Gründen der Übersichtlichkeit nur einige mit Bezugszeichen versehen wurden und die in zwei Reihen nebeneinander und in jeweils zwanzig Spalten übereinander regelmäßig so angeordnet sind, dass ihre Mittenabstände den Mittenabständen der Lichtaustrittsöffnungen 12 entsprechen. Ihre jeweilige Öffnungsfläche entspricht der Öffnungsfläche der Lichtaustrittsöffnungen 12 in dem Lochmatrixdisplay, so dass die Platinen 16 so auf der Lichtaustrittsseite des Lochmatrixdisplays 10 platziert werden können, dass im Betrieb des Lochmatrixdisplay ggf. von den entsprechenden LEDs erzeugtes Licht ungehindert durch die Lichtaustrittsöffnungen in dem Lochmatrixdisplay und den Platinen hindurchtreten kann. Die Fläche jeder Lichtaustrittsöffnung 18 in den Platinen 16 ist an die Fläche der ihr zugeordneten Lichtaustrittsöffnung 12 in dem Lochmatrixdisplay 10 angepasst, so dass die Lichtintensität nicht gemindert wird.

Jede Platine 16 trägt bei diesem Ausführungsbeispiel zwölf Hochleistungs-LEDs 20, die bei diesem Ausführungsbeispiel in jeweils vier Gruppen zu jeweils drei LEDs angeordnet und so zwischen benachbarten Lichtaustrittsöffnungen 18 auf den Platinen 16 angeordnet sind, dass sie zumindest in der Hauptabstrahlrichtung des Lochmatrixdisplays den Lichtaustritt von ggf. erzeugtem und durch die entsprechenden Lichtaustrittsöffnungen hindurchtretendem Licht nicht behindern. Je nach gewünschter Lichtverteilung und Ausgestaltung der verwendeten LEDs können die LEDs 20 selbstverständlich mit entsprechenden, an sich bekannten Lichtleitelementen wie insbesondere Linsen und Reflektoren versehen sein, um die kundenseitig gewünschte Lichtverteilung zu erzielen.

Die vier Gruppen von LEDs 20 werden bei diesem Ausführungsbespiel gemeinsam angesteuert. Es sei jedoch darauf hingewiesen, dass es auch möglich und bei bestimmten Ausführungsformen z.B. zur Erzeugung eines sog. laufenden Lichts auch notwendig ist, die Gruppen oder auch einzelne LEDs einzeln anzusteuern. Auch ist es möglich, auf der oder den Platine(n) verschiedene Sorten von LEDs anzuordnen, die wahlweise angeschaltet werden können und die zur Erfüllung unterschiedlicher Aufgaben ausgebildet sind, z.B. als Zusatzscheinwerfer, farbige Blitzlichter etc.

Durch entsprechende Ansteuerung der LEDs 20 kann dann bei Bedarf ein zusätzliches optisches Warnsignal, insbesondere eine fahrzeugheckseitiges Warnsignal erzeugt werden. Die Platinen können in einfacher Weise an dem Lochmatrixdisplay 10 befestigt werden, zum Beispiel mittels geeigneter Befestigungsschrauben, die durch die Befestigungsöffnungen 22 geführt werden. Insbesondere können die Platinen leicht auch bei existierenden Lochmatrixdisplays nachgerüstet werden.

Im Rahmen des Erfindungsgedankens sind zahlreiche Abwandlungen und Weiterbildungen möglich, die sich zum Beispiel auf die Anzahl und Ausgestaltung der Platinen und die Art, die Anzahl und die Anordnung der darauf vorgesehenen LEDs beziehen. Beispielsweise kann an Stelle zweier separater Platinen eine durchgehende Platine vorgesehen werden. Die Platinen können dabei direkt auf ein Lochmatrixdisplay aufgesetzt werden oder indirekt zum Beispiel unter Zwischenschaltung on flachen Lichtleitkörpern zwischen den Lichtaustrittsöffnungen des Lochmatrixdisplays und der Eingangsseite der entsprechenden Lichtaustrittsöffnungen in den Platinen. Dies kann vorteilhaft sein, um Platz für eine rückseitige Verdrahtung auf den Platinen zu schaffen.

Auch ist es vorteilhaft möglich, alternativ oder zusätzlich zu den oder anstelle der gezeigten Hochleistungs-LEDs zur Erzeugung eines optischen Warnsignals LEDs zur Erzeugung von sog. Arbeitslicht auf den Platinen vorzusehen, die bei Bedarf zum Beispiel eine Unfallstelle beleuchten können. Alle oder bestimmte der auf der oder den Platine(n) angeordneten LEDs können farbig sein, um z.B. optische Warnsignale wie z.B. blitzendes Blaulicht realisieren zu können. Ein besonderer Vorteil der Erfindung liegt in der Modularität des Systems, das bestehende modulare Systeme für Warnbalken ergänzt und es ermöglicht, kostengünstig individuell an jeweilige Kundenwünsche angepasste Warnbalken zusammenzustellen.

## Patentansprüche

1. Zusatzlichtsystem für Warnbalken mit LED-Lochmatrixdisplay (10), wobei das Lochmatrixdisplay (10) auf einer Lichtaustrittsseite mit einer Vielzahl von Lichtaustrittsöffnungen (12) versehen ist,
**gekennzeichnet durch**,
wenigstens eine auf zumindest einen Abschnitt der Lichtaustrittsseite des Lochmatrixdisplays (10) aufsetzbare Platine (16) mit einer Anzahl von LEDs (20),
wobei die Platine (16) über Lichtaustrittsöffnungen (18) verfügt, die so angeordnet sind, dass sie mit Lichtaustrittsöffnungen (12) des Lochmatrixdisplays (10) übereinstimmen, und
wobei die LEDs (20) auf der im bestimmungsgemäßen Montagezustand der Platine (16) auf dem Lochmatrixdisplay (10) der Lichtaustrittsseite des Lochmatrixdisplays (10) abgewandten Seite der Platine (16) zwischen Lichtaustrittsöffnungen (18) angeordnet sind.

2. Zusatzlichtsystem nach Anspruch 1, **dadurch gekennzeichnet, dass** zwei längliche Platinen (16) vorgesehen sind, die sich im bestimmungsgemäßen Montagezustand quer über zumindest einen Abschnitt des Lochmatrixdisplays (10) erstrecken und seitlich über dieses hinausragen.

3. Zusatzlichtsystem nach Anspruch 1 oder 2, **dadurch gekennzeichnet, dass** die LEDs (20) auf der oder den Platine(n) (16) in mehreren Gruppen, vorzugsweise auf jeder Platine in drei oder vier Gruppen zu je drei oder vier LEDs, angeordnet sind.

4. Zusatzlichtsystem nach einem der Ansprüche 1 bis 3, **dadurch gekennzeichnet, dass** zumindest bestimmte der LEDs (20) der Platine (16) Hochleistungs-LEDs sind und das Zusatzlichtsystem als Zusatzwarnsystem, insbesondere als Heckwarnsystem, ausgebildet ist.

5. Zusatzlichtsystem nach einem der Ansprüche 1 bis 4, **dadurch gekennzeichnet, dass** zumindest bestimmte der LEDs (20) der Platine (16) zur Erzeugung von Arbeitslicht ausgestaltet sind.

6. Zusatzlichtsystem nach einem der Ansprüche 1 bis 5, **dadurch gekennzeichnet, dass** zumindest bestimmte der LEDs (20) der Platine (16) farbiges Licht abgeben können.

7. Zusatzlichtsystem nach einem der Ansprüche 1 bis 6, **dadurch gekennzeichnet, dass** es modular aufgebaut ist und eine individuelle Bestückung der Platine(n) (16) mit einzeln oder in Gruppen ansteuerbaren LEDs (20) erlaubt.

8. Zusatzlichtsystem nach einem der Ansprüche 1 bis 7, **dadurch gekennzeichnet, dass** die Platine (16) zusätzlich zu den Lichtaustrittsöffnungen (18) über Befestigungsöffnungen (22) zum Durchführen von Befestigungselementen zwecks Befestigung der jeweiligen Platine (16) an dem Lochmatrixdisplay (10) verfügt.

9. Warnbalken mit einem Lochmatrixdisplay (10) zur Darstellung von aus einer Anzahl von Lichtpunkten gebildeten Zeichen, insbesondere alphanumerischen Zeichen, ferner umfassend ein Zusatzlichtsystem nach einem der Ansprüche 1 bis 8.

10. Einsatzfahrzeug mit einem Warnbalken nach Anspruch 9.

## Claims

1. An additional light system for warning bars with LED hole matrix display (10), wherein the hole matrix display (10) is provided with a plurality of light exit openings (12) on a light exit side,
**characterized in**
at least one printed circuit board (16) with a number of LEDs (20) which can be placed on at least one section of the light exit side of the hole matrix display (10),
the printed circuit board (16) having light exit openings (18) which are arranged in such a way that they match light exit openings (12) of the hole matrix display (10), and
wherein the LEDs (20), in the intended assembly condition of the printed circuit board (10) on the hole matrix display (10), are arranged on the side of the printed circuit board (16) facing away from the light exit side of the hole matrix display (10) between light exit openings (18).

2. The additional light system according to claim 1, **characterized in that** two elongated printed circuit boards (16) are provided, which, in the intended assembly condition, extend transversely across at least a section of the hole matrix display (10) and laterally project beyond the same.

3. The additional light system according to claim 1 or 2, **characterized in that** the LEDs (20) are arranged on the printed circuit board(s) (16) in several groups, preferably on each printed circuit board in three or four groups of three or four LEDs.

4. The additional light system according to any one of claims 1 to 3, **characterized in that** at least certain of the LEDs (20) of the printed circuit board (16) are high-performance LEDs and the additional light system is designed as an additional warning system, in particular as a rear warning system.

5. The additional light system according to any one of claims 1 to 4, **characterized in that** at least certain of the LEDs (20) of the printed circuit board (16) are designed to generate work light.

6. The additional light system according to any one of claims 1 to 5, **characterized in that** at least certain of the LEDs (20) of the printed circuit board (16) can emit colored light.

7. The additional light system according to any one of claims 1 to 6, **characterized in that** it is constructed in a modular way and allows an individual placement of LEDs (20) which are controllable individually or in groups, on the printed circuit board(s) (16).

8. The additional light system according to any one of claims 1 to 7, **characterized in that**, in addition to the light exit openings (18), the printed circuit board (16) has fastening openings (22) for passing through fasteners for the purpose of fastening the respective printed circuit board (16) to the hole matrix display (10).

9. A warning bar with a hole matrix display (10) for displaying characters formed from a number of points of light, in particular alphanumeric characters, further comprising an additional light system according to any one of claims 1 to 8.

10. An emergency vehicle with a warning bar according to claim 9.

## Revendications

1. Système de lumière supplémentaire pour rampes de signalisation comprenant un affichage à DEL à matrice à trous (10), ledit affichage à matrice à trous (10) étant pourvu sur un côté de sortie de lumière d'une pluralité d'ouvertures de sortie de lumière (12),
**caractérisé par**
au moins une carte de circuits imprimés (16) comprenant un nombre de DEL (20) et apte à être rapportée sur au moins une portion du côté de sortie de lumière de l'affichage à matrice à trous (10),
dans lequel la carte de circuits imprimés (16) dispose d'ouvertures de sortie de lumière (18) qui sont agencées de manière à coïncider avec des ouvertures de sortie de lumière (12) de l'affichage à matrice à trous (10), et
dans lequel les DEL (20) sont agencées sur la face de la carte de circuits imprimés (16) entre des ouvertures de sortie de lumière (18), qui, à l'état de montage prévu de la carte de circuits imprimés (16) sur l'affichage à matrice à trous (10), montre dans la direction opposée au côté de sortie de lumière de l'affichage à matrice à trous (10).

2. Système de lumière supplémentaire selon la revendication 1, **caractérisé en ce que** deux cartes allongées de circuits imprimés (16) sont prévues qui, à l'état de montage prévu, s'étendent transversalement sur au moins une portion de l'affichage à matrice à trous (10) et dépassent celui-ci latéralement.

3. Système de lumière supplémentaire selon la revendication 1 ou 2, **caractérisé en ce que** les DEL (20) sont disposées en plusieurs groupes sur la ou les carte(s) de circuits imprimés (16), de préférence sur chaque carte de circuits imprimés en trois ou quatre groupes ayant chacun trois ou quatre DEL.

4. Système de lumière supplémentaire selon l'une quelconque des revendications 1 à 3, **caractérisé en ce que** certaines au moins des DEL (20) de la carte de circuits imprimés (16) sont des DEL à haute puissance et que le système de lumière supplémentaire est conçu en tant que système de signalisation supplémentaire, en particulier en tant que système de signalisation arrière.

5. Système de lumière supplémentaire selon l'une quelconque des revendications 1 à 4, **caractérisé en ce que** certaines au moins des DEL (20) de la carte de circuits imprimés (16) sont conçues pour générer de la lumière de travail.

6. Système de lumière supplémentaire selon l'une quelconque des revendications 1 à 5, **caractérisé en ce que** certaines au moins des DEL (20) de la carte de circuits imprimés (16) peuvent émettre de la lumière colorée.

7. Système de lumière supplémentaire selon l'une quelconque des revendications 1 à 6, **caractérisé en ce qu'**il est conçu de façon modulaire et permet d'équiper individuellement la (les) carte(s) de circuits imprimés (16) de DEL (20) aptes à être commandées de manière individuelle ou en groupes.

8. Système de lumière supplémentaire selon l'une quelconque des revendications 1 à 7, **caractérisé en ce que** la carte de circuits imprimés (16) dispose, en plus des ouvertures de sortie de lumière (18), d'ouvertures de fixation (22) destinées à faire passer des éléments de fixation afin de fixer la carte de circuits imprimés (16) respective à l'affichage à matrice à trous (10).

9. Rampe de signalisation comprenant un affichage à matrice à trous (10) destiné représenter des caractères constitués par un nombre de points lumineux, en particulier des caractères alphanumériques, comprenant en outre un système de lumière supplémentaire selon l'une quelconque des revendications 1 à 8.

10. Véhicule d'intervention comprenant une rampe de signalisation selon la revendication 9.
